Europäisches Patentamt

European Patent Office

Office européen des brevets

(19)

(11) Veröffentlichungsnummer: **0 504 716 A2**

## (12) EUROPÄISCHE PATENTANMELDUNG

(21) Anmeldenummer: **92104113.3**

(22) Anmeldetag: **10.03.92**

(51) Int. Cl.5: **H04M 19/02**

(30) Priorität: **21.03.91 DE 4109309**

(43) Veröffentlichungstag der Anmeldung:
**23.09.92 Patentblatt 92/39**

(84) Benannte Vertragsstaaten:
**BE DE FR IT**

(71) Anmelder: **SIEMENS AKTIENGESELLSCHAFT**
**Wittelsbacherplatz 2**
**W-8000 München 2(DE)**

(72) Erfinder: **Böttger, Detlev, Dipl.-Ing.**
**Im Heimsoth 48**
**W-5840 Schwerte 40(DE)**
Erfinder: **Dziennus, Norbert, Dipl.-Ing.**
**Johannisbergstrasse 39**
**W-4600 Dortmund 50(DE)**
Erfinder: **Fink, Günter**
**Reinekestrasse 31**
**W-5000 Köln 90(DE)**
Erfinder: **Busch, Gerd, Dipl.-Ing.**
**Am Erlenkamp 17**
**W-4630 Bochum 1(DE)**

(54) **Verfahren zur Aktivierung einer optischen Anzeige in einem an eine Kommunikationsvermittlungsanlage angeschlossenen Kommunikationsgerät.**

(57) Zur Aktivierung der optischen Anzeige, die durch lichtemittierende Dioden (LED1, LED2), die parallel zum akustischen Signalgeber (RA) geschaltet sind, realisiert ist, wird an die analoge Teilnehmeranschlußleitung (ASL) ein wechselspannungsförmiges Signal angelegt. Durch die Wahl seiner charakteristischen Parameter (Frequenz, Verhältnis der Zeitdauer des Signals und anschließende Pausenzeit) ist sichergestellt, daß die akustische Rufanzeige nicht anspricht. Als wechselstromförmiges Signal wird die getaktete Rufsignalspannung verwendet. Diese Taktung kann zentral oder leitungsindividuell erfolgen. Anstelle der getakteten Rufsignalspannung kann auch ein zusätzlicher zentraler Wechselspannungssignalgeber (SG) verwendet werden, dessen Frequenz sich deutlich von der Resonanzfrequenz der akustischen Rufanzeige im Endgerät abhebt.

FIG 1

EP 0 504 716 A2

Die Erfindung betrifft ein Verfahren zur Aktivierung einer optischen Anzeige in einem an eine programmgesteuerte Kommunikationsvermittlungsanlage über analoge Anschlußleitungen bzw. Anschlußtechnik angeschlossenen Kommunikationsendgerät, wobei die Kommunikationsvermittlungsanlage eine u. a. die vermittlungstechnische Steuerung und Koordinierung durchführende zentrale Steuereinheit aufweist, und in den jeweiligen Leitungsanschlußeinrichtungen durch eine Rufprozedur Schaltmittel gesteuert werden, durch die wechselspannungsförmige Rufsignale an die jeweilige Anschlußleitung anschaltbar sind, und die Rufsignale in einem Ruftongenerator einer zentralen Signaleinrichtung erzeugt und über eine Rufleitung an die Leitungsanschlußeinrichtungen verteilt werden. Die neuzeitlichen digitalen rechnergesteuerten Kommunikationsvermittlungsanlagen lassen den Einsatz von unterschiedlichen Kommunikationsendgeräten zu. Diese können sich also in ihrer Anschlußart und gegebenenfalls in den ihnen zugrundeliegenden Wahlverfahren unterscheiden. So dienen beispielsweise digitale Teilnehmeranschlußbaugruppen für den Anschluß von digitalen Kommunikationsendgeräten. Analoge Kommunikationsendgeräte sind über eine analoge "Anschlußtechnik" angeschlossen. Die analogen Sprach-, Wähl- und Rufsignale werden hierbei über analoge Anschlußleitungen, die beispielsweise durch zwei symmetrische verdrillte Kupferleitungen gebildet werden, vom bzw. zum Kommunikationsendgerät übermittelt. Für die Aktivierung der akustischen Rufeinrichtung in jedem Kommunikationsendgerät sind überwiegend niederfrequente Wechselstromsignale als Rufsignale vorgesehen. Diese wechselspannungsförmigen Rufsignale werden in digitalen programmgesteuerten Kommunikationsvermittlungsanlagen in einer zentralen Rufgeneratoreinrichtung erzeugt und über eine zentrale Rufleitung an die Leitungsanschlußeinrichtungen geführt. In den für den Anschluß analoger Kommunikationsendgeräte vorgesehenen Leitungsanschlußeinrichtungen werden die Rufsignale mit Hilfe von Schaltmitteln, die z. B. durch die Kontakte von Relais realisiert sind, an die Adern der jeweiligen Anschlußleitungen angeschaltet. Die in den Leitungsanschlußeinrichtungen angeordneten Schaltmittel werden durch in der Kommunikationsvermittlungsanlage realisierte Rufprozeduren gesteuert.

Digitale Kommunikationsendgeräte weisen in der Regel ein Display auf, über das einem Teilnehmer gesprächsbegleitend oder auch im Ruhezustand des jeweiligen Endgerätes bestimmte Informationen in Form einer Textdarstellung angezeigt werden können. Für angeschlossene analoge Kommunikationsendgeräte, an denen kein Display vorhanden ist, werden in zunehmendem Maße neben den akustischen oder optischen Ausgaben für die Rufsignale zusätzliche optische Anzeigen verwendet. Eine solche optische Anzeige kann z. B. durch Aktivieren eines am jeweiligen Kommunikationsendgerät vorhandenen Leuchtelementes erfolgen. Dadurch können auch neue Leistungsmerkmale realisiert werden. Eines dieser Leistungsmerkmale ist Z. B. das Merkmal "Message Waiting". Hierbei kann durch einen entsprechenden Bedienerauftrag ein Fernsprechteilnehmer darüber informiert werden, daß beispielsweise an der Rezeption eines Hotels eine Nachricht für ihn vorliegt. Es ist auch dadurch möglich, an einem analogen Kommunikationsendgerät nach dem Ende einer aktuellen Verbindung durch diese zusätzliche optische Anzeige zu signalisieren, daß während der vorhergehenden Verbindung ein weiterer Verbindungsaufbau zu diesem Endgerät versucht wurde. Um einen Teilnehmer eines Nebenstellensystems durch ein optisches Aufmerksamkeitssignal eine bestimmte Information zu übermitteln, ist es z. B. bekannt, durch einen kurzen spannungsmäßig überhöhten Impuls eine am Fernsprechendgerät angebrachte Glimmlampe zu zünden. Die weitere Aktivierung der Glimmlampe erfolgt dann durch den Schleifenstrom. Eine andere Möglichkeit, das Leistungsmerkmal "Message Waiting" zu realisieren, besteht in der Anwendung einer zusätzlichen Baueinheit, für die ein eigenes Leitungssystem vorzusehen ist. Über dieses Leitungssystem wird dann eine Lampe aktiviert.

Es ist die Aufgabe der Erfindung, in einem an eine programmgesteuerte Kommunikationsvermittlungsanlage der eingangs genannten Art angeschlossenen Kommunikationsendgerät eine an diesem angeordnete optische Anzeige für die Realisierung zusätzlicher Leistungsmerkmale in einfacher, nicht störungsanfälliger Weise zu aktivieren.

Dies wird dadurch erreicht, daß mit Hilfe mindestens eines für jede der genannten Anschlußleitungen vorhandenen zusätzlichen Schaltmittels entweder durch eine an einem Vermittlungsplatz durch eine bestimmte Prozedur vorgenommene Informationseingabe oder automatisch im Zusammenhang mit einer vorbestimmten vermittlungstechnischen Situation zur Aktivierung der optischen Anzeige in einem damit ausgewählten Kommunikationsendgerät an die betreffende Anschlußleitung in einer bis zur Bildung einer Endeinformation bestehenden Zeitspanne ein wechselspannungsförmiges Anzeigesignal angeschaltet wird, daß durch Wahl seiner charakteristischen Parameter und/oder durch die Wahl des sein wirksames Anliegen bestimmenden Anschaltetaktes ein Ansprechen der für die akustische Wiedergabe der Rufsignale an dem betreffenden Kommunikationsendgerät vorhandenen akustischen Rufanzeige sicher unterbunden ist, daß mit jeder aktuellen Anschaltung des wechselspannungsförmigen Anzeigesignales bis zur durch die zentrale Steuereinheit oder teilnehmer- bzw. vermittlungsplatzseitig initiierbaren Endeinformation die wirksame Anzeigesignalanschaltung als Steuerinformation in einem Arbeitsspeicherbereich eingeschrieben ist und somit durch die zentrale Steuereinheit abfragbar ist, daß der Anzeigezustand der optischen Anzeige feststellbar ist.

Die Aktivierung der optischen Anzeige erfolgt durch wechselspannungsförmige Signale, die im Bedarfsfall gesteuert durch die zentrale Steuereinheit wirksam an die betreffende Anschlußleitung angelegt werden. Diese Signale sind so geartet, daß ein Ansprechen der gleichfalls mit der Anschlußleitung im Endgerät gekoppelten akustischen Rufanzeige mit Sicherheit ausgeschlossen ist. Dies kann beispielsweise dadurch geschehen, daß die Frequenz der wechselspannungsförmigen Signale einen deutlichen Abstand von der Resonanzfrequenz des akustischen Signalgebers aufweist. Von der zentralen Steuereinheit werden aufgrund der in der Anlage implementierten Anzeigeprozedur die Anforderungen zum Übermitteln von Anzeigesignalen für die optische Anzeige bewertet und die entsprechenden Vorgänge, wie z. B. das Steuern des Schaltmittels in der Leitungsanschlußeinrichtung, bewirkt. Das Anlegen des Anzeigesignals erfolgt in ähnlich einfacher und sicherer Weise wie das Anlegen des Rufsignals.

Das wechselspannungsförmige Anzeigesignal wird gemäß einer Weiterbildung der Erfindung durch einen zentralen Signaltongenerator erzeugt und über eine zusätzlich vorgesehene Signalleitung an die Leitungsanschlußeinrichtungen verteilt. In einer Leitungsanschlußeinrichtung wird es dann leitungsanschlußindividuell mit Hilfe des im Bedarfszeitraum dauerhaft betätigten Schaltmittels wirksam an die Anschlußleitung angelegt. Um ein Ansprechen der akustischen Rufanzeige zu vermeiden, liegt die Frequenz des wechselspannungsförmigen Anzeigesignals mit deutlichem Abstand oberhalb oder unterhalb der Resonanzfrequenz der akustischen Rufanzeige. Sie beträgt also z. B. ein Mehrfaches der Frequenz der Rufsignalspannung.

Gemäß einer Weiterbildung der Erfindung wird durch ein entsprechend getaktetes Schaltmittel zumindest ein Teil einer Wechselspannungsperiode der zentral erzeugten Rufsignalspannung wirksam angelegt. Dieser Bruchteil der Rufsignalspannung kann aufgrund seiner Zeitdauer die akustische Rufanzeige nicht aktivieren. Zwischen diesen wirksamen Anzeigesignalteilen in Form der einzelnen Ausschnitte aus der Rufwechselspannung liegt dann eine Pause vorgegebener kurzer Zeitdauer. Es ist also in einem solchen Fall kein zusätzlicher Signalspannungsgeber erforderlich. Es können die entsprechenden Signalanteile der Rufsignalspannung durch ein ausschließlich in der Anschlußeinrichtung vorgesehenes Schaltmittel in dem durch die zentrale Steuereinheit aufgrund der übermittelten Steuerinformationen bestimmten Takt an die jeweilige Anschlußleitung angelegt werden. Die einzelnen Bruchteile der Rufsignalspannung werden also in diesem Fall leitungsindividuell durch die getaktete Ankopplung der Anschlußleitung an die zentrale Rufleitung zum jeweiligen Kommunikationsendgerät übermittelt.

Zur dynamischen Entlastung der zentralen Steuereinheit könnte die Erzeugung der getakteten Rufsignalspannung auch zentral vorgenommen werden. Diese getaktete Rufsignalspannung wird dann über eine zentrale Signalleitung den einzelnen Teilnehmeranschlußeinrichtungen zugeführt. In der Zeitspanne, in der die Übertragung der Rufsignalabschnitte erfolgen soll, wird dann durch die zentrale Steuereinheit ein diese zentrale Signalleitung mit der jeweiligen Anschlußleitung verbindender Schalter aktiviert.

In einfacher Weise ist die optische Anzeige durch mindestens eine im Kommunikationsendgerät in Reihe mit einem Kondensator die Leitungsadern überbrückende lichtemittierende Diode gebildet. Diese optische Anzeige kann auch durch zwei antiparallel geschaltete Dioden gebildet sein, wobei diese Parallelschaltung in Reihe mit einem Kondensator die Leitungsadern überbrückt. Die Reihenschaltung aus Kondensator und lichtemittierender Diode ist gemäß einer Weiterbildung der Erfindung im Endgerät parallel zur akustischen Rufanzeige geschaltet. Nach einer weiteren vorteilhaften Ausgestaltung der Erfindung sind die Schaltmittel durch Relais oder durch logische integrierte, wirksam schaltbare Schaltkreistechnik realisierbar. Durch die Möglichkeit des Wirksam- bzw. Unwirksamschaltens der Ausgänge bei diesen logischen Schaltkreisen ist die Realisierung von Relaisfunktionen möglich. Gemäß einer Weiterbildung ist das die zentrale Taktung der Rufsignalspannung bewirkende Schaltmittel entweder durch Steuerinformationen der zentralen Steuereinheit oder durch einen in der zentralen Signaleinrichtung realisierten Taktgenerator gesteuert.

Im folgenden wird das erfindungsgemäße Verfahren anhand von zwei Ausführungsbeispielen näher erläutert.

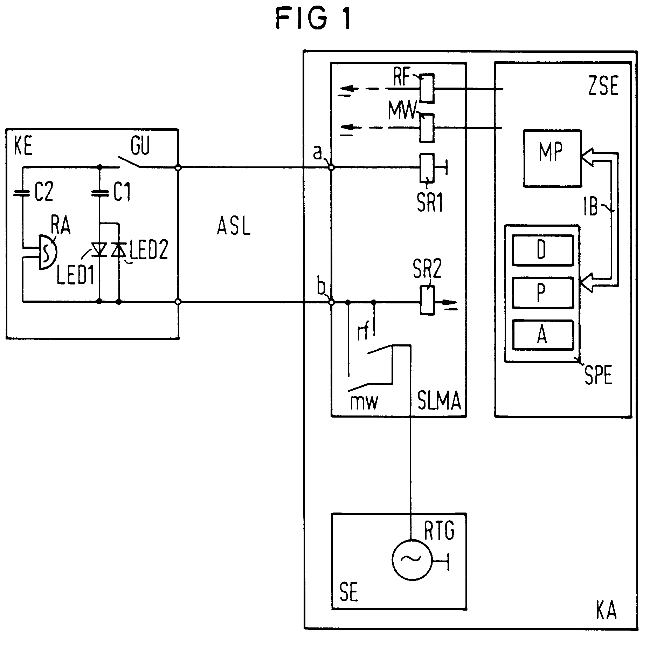

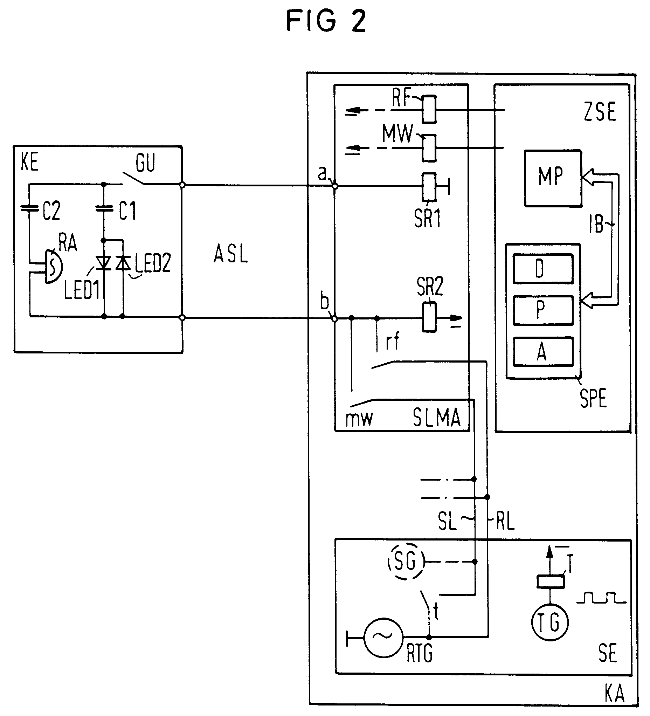

Die beiden Blockschaltbilder nach der FIG 1 und der FIG 2 unterscheiden sich in der Art der Erzeugung des Signals zur Aktivierung der optischen Anzeige im Kommunikationsendgerät. Es sind in den Blockschaltbildern lediglich die zum Verständnis der Erfindung notwendigen Komponenten dargestellt.

An die programmgesteuerte digitale Kommunikationsvermittlungsanlage KA nach FIG 1 sind sowohl digitale als auch analoge Kommunikationsendgeräte anschließbar. Dies erfolgt jeweils über entsprechend ausgebildete Leitungsanschlußeinrichtungen. An eine für den Anschluß von analogen Kommunikationsendgeräten vorhandene Leitungsanschlußeinrichtung SLMA können beispielsweise 16 derartige analoge Kommunikationsendgeräte über Anschlußleitungen ASL angeschlossen werden. Es ist eine zentrale Steuereinheit ZSE vorhanden, durch die sämtliche Steuerungsaufgaben des Systems übernommen werden. Sie wird durch die zentrale Speichereinrichtung SPE und die Mikroprozessoreinrichtung MP und gegebenenfalls weiteren nicht dargestellten Einrichtungen, wie z. B. eine Schnittstelleneinrichtung, gebildet. Die zentrale Speichereinrichtung SPE besteht aus einem Kundendatenspeicher KD, einem Programmspeicher P und aus einem Arbeitsspeicher A. Im Programmspeicher P sind unter anderem das Anlagenbetriebsprogramm abgespeichert. In dem Speicherteil KD sind die Kundendaten, wie z. B. die den einzelnen Kommunikationsendgeräten KE zugeteilten Berechtigungen, abgelegt. Der Arbeitsspeicher A dient unter anderem der Aufnahme von temporären Daten zur Programmablaufsteuerung. Der aus Adreß-, Daten- und Steuerleitungen gebildete interne Bus IB kann in nicht weiter dargestellten Weise auch über entsprechende Schnittstelleneinrichtungen auf einen lokalen Bus geführt sein. Darüberhinaus könnten bei entsprechender Anlagengröße die Steuerverbindungen zu nicht weiter dargestellten Eingabe-/Ausgabeeinrichtungen, die für die dynamische Entlastung der zentralen Mikroprozessoreinrichtung vorgesehen sind, vorgenommen werden. Diese tauschen dann ihrerseits in einem vorgegebenen Übermittlungsprotokoll Informationen mit der in den Leitungsanschlußeinrichtungen gegebenenfalls jeweils zusätzlich vorgesehenen Leitungssteuerungseinheit aus.

Mit Hilfe der Mikroprozessoreinrichtung MP wird die vermittlungstechnische und sicherheitstechnische Steuerung der Kommunikationsvermittlungsanlage KA durchgeführt. In der Leitungsanschlußeinrichtung SLMA werden beispielsweise bei einem für das Kommunikationsendgerät KE bestehenden Verbindungswunsch die Rufsignale angelegt. Dies erfolgt beispielsweise durch den Kontakt rf eines durch die Mikroprozessoreinrichtung MP gesteuerten Rufrelais RF. Mit dem Kontakt rf werden in einem bestimmten Rufrhythmus die von dem zentralen Rufgenerator RTG über die gemeinsame Rufleitung RL zugeführten Rufsignale an die Anschlußleitung angelegt. Durch unterschiedliche Zeitspannen, in denen die Rufsignale an die jeweilige Anschlußleitung angeschaltet werden, können unterschiedliche Rufrhythmen, z. B. für Internruf, Externruf, usw., bewirkt werden. Der zentrale Ruftongenerator RTG ist eine Teilkomponente einer zentralen Signaleinrichtung SE. Es werden also die von den in der Kommunikationsvermittlungsanlage implementierten Vermittlungsprozeduren übermittelten Anforderungen zum Aussenden von Rufsignalen für die jeweiligen Kommunikationsendgeräte mit Hilfe einer implementierten Rufprozedur bewertet und die entsprechenden Vorgänge gesteuert. Die an die Leitung ASL angelegten wechselstromförmigen Rufsignale beeinflussen im Kommunikationsendgerät KE über den Kondensator C2 die akustische Rufanzeige RA. Für diese akustische Ausgabe der Rufsignale kann diese Rufanzeige durch eine Klingeleinrichtung realisiert sein. Es ist auch die Abgabe eines akustischen Signals in Form eines Tonrufes durch einen Piezoelektrischen Wandler denkbar. Im Ausführungsbeispiel sind nur die zur Erläuterung der Erfindung erforderlichen Komponenten eines Kommunikationsendgerätes KE dargestellt. Parallel zu dieser Serienschaltung aus einem Kondensator C2 und der akustischen Rufsignalanzeige RA ist über einen Kondensator C1 eine Leuchtanzeige angeordnet. Diese Leuchtanzeige ist im Ausführungsbeispiel durch zwei antiparallel geschaltete lichtemittierende Dioden LED1 und LED2 realisiert.

Die Initialisierung für das Aktivieren der lichtemittierenden Dioden LED1 und LED2 kann entweder durch einen entsprechenden Bedienungsauftrag oder automatisch erfolgen. Diese automatische Aktivierung ist beispielsweise durch ein der Kommunikationsvermittlungsanlage KA zugeordnetes - nicht weiter dargestelltes - Sprachinformationssystem möglich. In einem solchen Fall kann dem betreffenden Teilnehmer angezeigt werden, daß in der ihm zugeordneten Box des Sprachinformationssystems (Voice Mail System) eine Nachricht hinterlegt wurde.

Eine andere Möglichkeit besteht darin, durch einen Bedienerauftrag die Aktivierung der Leuchtanzeige im Kommunikationsendgerät zu veranlassen. Hierzu ist dann beispielsweise durch eine Bedienperson, gegebenenfalls unter Beschränkung auf den zugehörigen Vermittlungsplatz, neben der Rufnummer des zu informierenden Teilnehmers ein für die Aktivierung dieses Leistungsmerkmals charakteristischer Ziffern- und/oder Steuerzeichencode einzugeben. Eine derartige Initialisierungsinformation veranlaßt dann die zentrale Steuereinheit ZSE durch entsprechende Steuerimpulse das Relais MW periodisch zu betätigen. Der Taktrhythmus ist dabei so gewählt, daß durch den Kontakt mw dieses Relais nur kurze Ausschnitte aus der über die zentrale Rufleitung RL zugeführten Rufsignalspannung an die Anschlußleitung ASL angelegt wird. Die jeweilige Zeitdauer des wirksamen Anlegens dieser Rufwechselspannung ist so kurz gewählt, daß infolge der Ansprechträgheit der akustischen Rufanzeige diese nicht anspricht.

Dieser Abschnitt der Rufsignalwechselspannung umfaßt mindestens eine Halbwelle der Wechselspannung. Es schließt sich dann eine Pausenzeit an, die ein Mehrfaches der Zeitdauer, in der die Wechselspannung anliegt, beträgt. Im Bedarfsfalle werden also bestimmte Bruchteile der Rufsignalwechselspannung an die Leitung gelegt. Über den geschlossenen Gabelumschaltekontakt GU wird dann - je nach positiver oder negativer Halbwelle - eine der lichtemittierenden Dioden LED1 bzw. LED2 wirksam geschaltet. Durch die entsprechende Wahl der Anschaltedauer dieser Wechselspannung und der jeweils dazwischenliegenden Pausenzeit läßt sich der Eindruck eines gleichmäßigen Leuchtens dieser Dioden vermitteln. Das wirksame Anlegen der Bruchteile aus der Signalwechselspannung setzt sich dann solange fort, bis eine Endeinformation gebildet wird. Mit dieser Endeinformation kann dann die im Arbeitsspeicher A abgelegte Initialisierungsinformation überschrieben werden. Diese Endeinformation wird beispielsweise bei Eintreffen einer Rufanforderung für das betreffende Kommunikationsendgerät KE bewirkt. Es kann auch durch den Teilnehmer an die Kommunikationsvermittlungsanlage KA übermittelt werden. Durch die im Kommunikationsendgerät KE vorgesehene optische Anzeige könnte auch signalisiert werden, daß während einer vorhergehenden aktuellen Verbindung ein weiterer Verbindungsaufbau zu diesem Kommunikationsendgerät versucht wurde. Durch ein anschließendes Betätigen eines entsprechenden Eingabemittels an diesem analogen Kommunikationsendgerät könnte dann mit Hilfe der Kommunikationsvermittlungsanlage selbsttätig eine Verbindung zu demjenigen Kommunikationsendgerät hergestellt werden, von dem dieser Verbindungswunsch ausgegangen ist.

Mit SR1 und SR2 sind die in der Teilnehmeranschlußeinrichtung für die einzelnen Anschlußleitungen vorhandenen Speiserelais angedeutet. Der individuell für jede Anschlußleitung vorhandene und durch die zentrale Steuereinheit ZSE im Bedarfsfalle in dem vorgegebenen Rhythmus betätigte Kontakt kann auch durch logische, integrierte wirksam schaltbare Schaltkreistechnik realisiert sein.

Im Ausführungsbeispiel nach der FIG 2 wird im Gegensatz zu dem Ausführungsbeispiel nach der FIG 1 das Relais MW nicht durch die zentrale Steuereinheit ZSE getaktet, sondern es erfolgt das taktweise Anlegen der Rufsignalwechselspannung zentral in der Signaleinrichtung SE. Die einzelnen Ausschnitte aus der Rufsignalwechselspannung werden vermittels des Kontaktes t an eine zentrale Signalleitung SL angelegt und den einzelnen Anschlußeinrichtungen SLMA zugeführt. Dort erfolgt die leitungsindividuelle Ankopplung über den Kontakt wm. Dieser Kontakt ist durch die zentrale Steuereinheit ZSE in der Bedarfszeit, die durch die Initiierungs- und durch die Endeinformation gegeben ist, dauerhaft betätigt. Der Kontakt t, der die Bruchteile der vom Rufgenerator RTG gelieferten Rufsignalwechselspannung anlegt, ist ein Kontakt eines Relais T, das seinerseits in dem vorgesehenen und von einem Taktgenerator TG gelieferten Takt wirksam bzw. unwirksam geschaltet wird. Das zentrale Relais T könnte auch durch die zentrale Steuereinheit ZSE gesteuert werden.

Anstelle der getakteten Rufsignalspannung kann auch über eine zentrale Signalleitung SL ein von einem Wechselspannungsgenerator SG gelieferte Wechselspannung den einzelnen Leitungsanschlußeinrichtungen SLMA zugeführt werden. Dies ist in der FIG 2 durch die gestrichelt angedeutete Anschaltung dieses Generators SG, der der Signaleinrichtung SE zugehörig ist, angedeutet. In einem solchen Fall entfällt dann die getaktete Ankopplung der Rufsignalwechselspannung durch den Kontakt t. Die vom Signalgenerator SG gelieferte Wechselspannung weist eine Frequenz auf, die mit deutlichem Abstand oberhalb oder unterhalb der Resonanzfrequenz der akustischen Rufanzeige RA im Kommunikationsendgerät liegt, so daß die akustische Rufanzeige RA nicht anspricht. Im jeweiligen Bedarfsfalle wird diese Wechselspannung durch den in dieser erforderlichen Zeitspanne dauerhaft betätigten Kontakt mw leitungsindividuell angelegt. Hierzu werden von der zentralen Steuereinheit ZSE die entsprechenden Steuerinformationen an das Relais MW gegeben. Die an der Leitung angelegte Wechselspannung aktiviert die Leuchtanzeige, die den Teilnehmer u. a. über die "Message Waiting" informiert.

Die übrigen Komponenten und Bauteile bzw. Baueinheit der FIG 2 entsprechen denen der FIG 1 und sind in gleicher Weise bezeichnet.

**Patentansprüche**

1. Verfahren zur Aktivierung einer optischen Anzeige (LED) in einem an eine programmgesteuerte Kommunikationsvermittlungsanlage (KA) über analoge Anschlußleitungen (ASL) bzw. Anschlußtechnik angeschlossenen Kommunikationsendgerät (KE), wobei die Kommunikationsanlage (KA) eine u. a. die vermittlungstechnische Steuerung und Koordinierung durchführende zentrale Steuereinheit (ZSE) aufweist und in den jeweiligen Leitungsanschlußeinrichtungen (SLMA) durch eine Rufprozedur Schaltmittel (RF) gesteuert werden, durch die wechselstromförmige Rufsignale an die jeweilige Anschlußleitung (ASL) anschaltbar sind und die Rufsignale in einem Ruftongenerator (RTG) einer zentralen Signaleinrichtung (SE) erzeugt und über eine Rufleitung (RL) an die Leitungsanschlußeinrichtungen (SLMA) verteilt werden,
**dadurch gekennzeichnet,**
daß mit Hilfe mindestens eines für jede der genannten Anschlußleitungen (ASL) vorhandenen zusätzlichen Schaltmittels (MW) entweder durch eine an einem Vermittlungsplatz durch eine bestimmte Prozedur vorgenommene Informationseingabe oder automatisch in Zusammenhang mit einer vorbestimmten vermittlungstechnischen Situation zur Aktivierung der optischen Anzeige (LED1, 2) in einem damit ausgewählten Kommunikationsendgerät (KE) an die betreffende Anschlußleitung (ASL) in einer bis zur Bildung einer Endeinformation bestehenden Zeitspanne ein wechselspannungsförmiges Anzeigesignal angeschaltet (Kontakt mw) wird, daß durch die Wahl seiner charakteristischen Parameter und/oder durch die Wahl des sein wirksames Anliegen bestimmenden Anschaltetaktes ein Ansprechen der für die akustische Wiedergabe der Rufsignale an dem betreffenden Kommunikationsendgerät (KE) vorhandenen akustischen Rufanzeige (RA) sicher unterbunden ist, daß mit jeder aktuellen Anschaltung des wechselspannungsförmigen Anzeigesignals bis zur durch die zentrale Steuereinheit (ZSE) oder teilnehmer- bzw. vermittlungsplatzseitig initiierbaren Endeinformation die wirksame Anzeigesignalanschaltung als Steuerinformation in einem Arbeitsspeicherbereich eingeschrieben ist und somit durch die zentrale Steuereinheit (ZSE) abfragbar ist, so daß der Anzeigezustand der optischen Anzeige feststellbar ist.

2. Verfahren nach Anspruch 1,
   **dadurch gekennzeichnet,**
   daß das wechselspannungsförmige Anzeigesignal in der Signaleinrichtung (SE) durch einen zentralen Signaltongenerator (SG) erzeugt wird und daß es über eine neben der Rufleitung (RL) zusätzlich vorgesehene Signalleitung (SL) an die Anschlußeinrichtungen (SLMA) verteilt wird und daß es in der jeweiligen Anschlußeinrichtung anschlußleitungsindividuell mit Hilfe des in der genannten Zeitspanne dauerhaft betätigten Schaltmittels (MW), Kontakt (mw) zur Übertragung an der Anschlußleitung anliegt (FIG 1).

3. Verfahren nach Anspruch 2,
   **dadurch gekennzeichnet,**
   daß die Frequenz des wechselspannungsförmigen Anzeigesignals mit deutlichem Abstand unterhalb oder oberhalb der Rufsignalspannung liegt.

4. Verfahren nach Anspruch 1,
   **dadurch gekennzeichnet,**
   daß durch ein entsprechend getaktetes Schaltmittel (T bzw. MW) ein die akustische Rufanzeige (RA) in keinster Weise aktivierender Teil zumindest einer Wechselspannungsperiode der vorhandenen Rufsignalspannung wirksam angelegt wird und zwischen diesen wirksamen Anzeigesignalteilen eine Pause vorgegebener kurzer Zeitdauer liegt.

5. Verfahren nach Anspruch 4,
   **dadurch gekennzeichnet,**
   daß das Schaltmittel (MW, mw) ausschließlich in der Anschlußeinrichtung (SLMA) vorhanden ist und daß die über die zentrale Rufleitung (RL) der Anschlußeinrichtung zugeführte Rufsignalspannung entsprechend den durch die zentrale Steuereinheit übermittelten Steuerinformationen getaktet wird und daß die entsprechend dieser Taktung wirksamen Signalanteile der Rufsignalspannung unmittelbar durch das Schaltmittel an die jeweilige Anschlußleitung (ASL) angelegt werden.

6. Verfahren nach Anspruch 4,
   **dadurch gekennzeichnet,**
   daß von der zentralen Signaleinrichtung (SE) eine gemeinsame die zentral erzeugte Anzeigesignale an die Leitungsanschlußeinrichtungen (SLMA) verteilende Anzeigesignalleitung (SL) zusätzlich vorgesehen ist, an die das getaktete Schaltmittel (T, Kontakt t) zentral ständig die durch die Taktfrequenz bestimmten Rufsignalabschnitte anliegt und daß in der Leitungsanschlußeinrichtung durch ein während der gesamten Übertragungszeitspanne jeweils durch die Steuereinheit wirksam geschaltetes Schaltmittel (MW, Kontakt mw) die empfangene getaktete Rufsignalspannung wirksam an die Anschlußleitung (ASL) angeschaltet wird.

7. Verfahren nach Anspruch 1,
   **dadurch gekennzeichnet,**
   daß zur optischen Anzeige in dem Kommunikationsendgerät (KE) zumindest eine mit der Anschlußleitung gekoppelte lichtemittierende Diode (LED) vorgesehen ist.

8. Verfahren nach Anspruch 7,
   **dadurch gekennzeichnet,**
   daß die lichtemittierende Diode (LED) parallel zu der akustischen Rufanzeige (RA) im Kommunikationsendgerät (KE) geschaltet ist.

9. Verfahren nach Anspruch 8,
   **dadurch gekennzeichnet,**
   daß mit der Durchschaltung einer Gesprächsverbindung die optische Anzeige in gleicher Weise wie die akustische Rufanzeige unwirksam geschaltet ist.

10. Verfahren nach einem der vorhergehenden Ansprüche,
    **dadurch gekennzeichnet,**
    daß die Schaltmittel (RF, MW, T) durch Relais oder durch logische, integrierte wirksam schaltbare Schaltkreistechnik realisierbar sind.

11. Verfahren nach Anspruch 6,
    **dadurch gekennzeichnet,**
    daß das zentrale Schaltmittel (T) entweder durch Steuerinformationen der zentralen Steuereinheit (ZSE) oder durch einen in der zentralen Takteinrichtung realisierten Taktgenerator (TG) gesteuert wird.

# FIG 1

# FIG 2